# EUROPEAN PATENT SPECIFICATION

(11) **EP 3 872 411 B1**
(45) Date of publication and mention of the grant of the patent: **22.11.2023**
(21) Application number: 21158509.6
(22) Date of filing: 22.02.2021
(51) Int. Cl.: F24H 1/26, F24H 9/00, F28D 7/00, F28D 7/02, F28D 7/10, F28F 1/12

(54) **HEAT EXCHANGER FOR BOILERS AND BOILER INCLUDING SAID HEAT EXCHANGER**
WÄRMETAUSCHER FÜR BOILER UND BOILER MIT DIESEM WÄRMETAUSCHER
ÉCHANGEUR DE CHALEUR POUR CHAUDIÈRES ET CHAUDIÈRE INCLUANT LEDIT ÉCHANGEUR DE CHALEUR

(30) Priority: 28.02.2020 IT 202000004204
(43) Date of publication of application: 01.09.2021
(73) Proprietor: Cestaro Fonderie SpA, 36050 Bressanvido (VI) (IT)
(72) Inventor: CESTARO, Giorgio, 36010 MONTICELLO CONTE OTTO (VI) (IT)
(74) Representative: Marchioro, Paolo

(56) References cited:
- EP-A1- 2 278 234
- EP-A1- 2 863 160
- EP-A1- 3 168 548
- WO-A1-2015/024712
- DE-A1-102005 010 501
- GB-A- 2 381 306

## Description

The invention concerns an improved heat exchanger for boilers, preferably for condensing boilers.

The invention concerns even a boiler, preferably of the condensing type, provided with said heat exchanger.

As is known, heat exchangers for condensing boilers must meet very strict requirements in terms of compactness and efficiency.

To meet said requirements, a heat exchanger of the known type generally comprises a tubular jacket which internally delimits a first duct for the downflow of a first heat exchange fluid, usually a hot gas produced by a burner.

The heat exchanger comprises also a second duct for the passage of a second heat exchange fluid, usually water. Said second duct is generally in thermal contact with at least one external wall of the tubular jacket and is generically characterized by a helical configuration.

There is also a plurality of pins, generally with circular cross section, or of tabs extending longitudinally and projecting from the internal surface of the tubular jacket towards the inside of the first duct.

More specifically, according to the known art, the pins are organized in staggered rows which project from two opposite sides of the tubular jacket towards the inside of the first duct.

Each pin extending from one side of the tubular jacket corresponds to a pin located on the other side, wherein the two pins have their respective facing ends at the level of the central area of the first duct.

Said pins force the hot gas to flow following a tortuous path and capture the heat of the hot gas to transfer it, through conduction, to the walls of the second duct and thus to the water which flows inside the latter.

The heat exchangers of the above-mentioned type are generally obtained through sand casting of a metal, preferably aluminium or another metal with analogous conductivity and/or weight.

However, the fact that the flame and the hot gas follow a tortuous trajectory along the first duct, due to said configuration of the pins, causes the drawback that part of the flame and of the hot gas tends to flow down towards the free ends of the pins themselves, thus exchanging a reduced quantity of heat with the latter and consequently with the walls of the tubular jacket.

More precisely, since the free ends of the pins are situated in the central area of the first duct, which is the farthest from the second duct, the fact that the gas flows mainly towards said central area limits the efficiency of the heat exchanger in terms of heat exchange.

Furthermore, said turbulent path of the flame and of the hot gas determines a high concentration of carbon monoxide in said area in proximity to the burner, due to an incorrect combustion reaction which in turn is due to a lack of oxygen.

Document EP2863160 discloses a heat exchanger comprising a first heat exchanging body having a first end and an opposite second end, at least a flue gas channel and at least a water channel, a longitudinal direction of the first body extending between the first and second end thereof, and a second heat exchanging body, having a first end and an opposite second end, at least a flue gas channel and at least a water channel, a longitudinal direction of the second body extending between the first and second end thereof, wherein the first end of the second body is connected to the second end of the first body, wherein a burner chamber is provided at the first end of the first body.

Document EP2278234 discloses a heat exchanger particularly suited to be used in condensation boilers, comprising: a tubular jacket that internally delimits a first duct developed between an inlet section and an outlet section that define an outflow direction for a first fluid; a second duct arranged in thermal contact with the tubular jacket and developed mainly outside the first duct between an inlet mouth and an outlet mouth for a second fluid; heat exchange elements projecting from the tubular jacket towards the inside of the first duct; a thin body arranged in the first duct parallel to the outflow direction and in thermal contact with one or more heat exchange elements.

The present invention intends to provide a heat exchanger which is more efficient than the heat exchangers of the known type just described above. More specifically, it is one object of the invention to provide a heat exchanger which makes it possible to obtain a higher heat balance in the heat exchange area.

Furthermore, it is one object of the invention to provide a heat exchanger which makes it possible to reduce the accumulation of carbon monoxide in the portion adjacent to the burner, due to a higher efficiency of the combustion reaction.

These objects are achieved by a heat exchanger according to the main claim. Other detailed characteristics of the heat exchanger that is the subject of the invention are described in the respective dependent claims.

In particular, the invention, according to said detailed characteristics, advantageously makes it possible to distribute the thermal energy in a uniform and controlled manner along the advance direction of the hot gas and furthermore, still advantageously, makes it possible to define a more linear path for the hot gas along said direction, in any case maintaining the heat exchanger highly efficient.

Said objects are also achieved by a boiler, preferably of the condensing type, the characteristics of which are specified in claim 9.

Said objects and advantages, which are specified below, will be understood thanks to the description of a preferred embodiment of the invention which is provided by way of non-limiting example making reference to the following attached drawings, wherein:
- Figure 1 shows an axonometric view of the heat exchanger which is the subject of the invention;
- Figure 2 shows the heat exchanger of Figure 1 and includes a schematic view of the second duct for the water flow;
- Figure 3 shows a partial sectional view of the heat exchanger of Figure 1, which makes it possible to observe the upper part of the first duct for the hot gas flow;
- Figure 4 shows a partial sectional view of the heat exchanger of Figure 1 according to plane IV-IV;
- Figure 4a shows a detail of Figure 4;

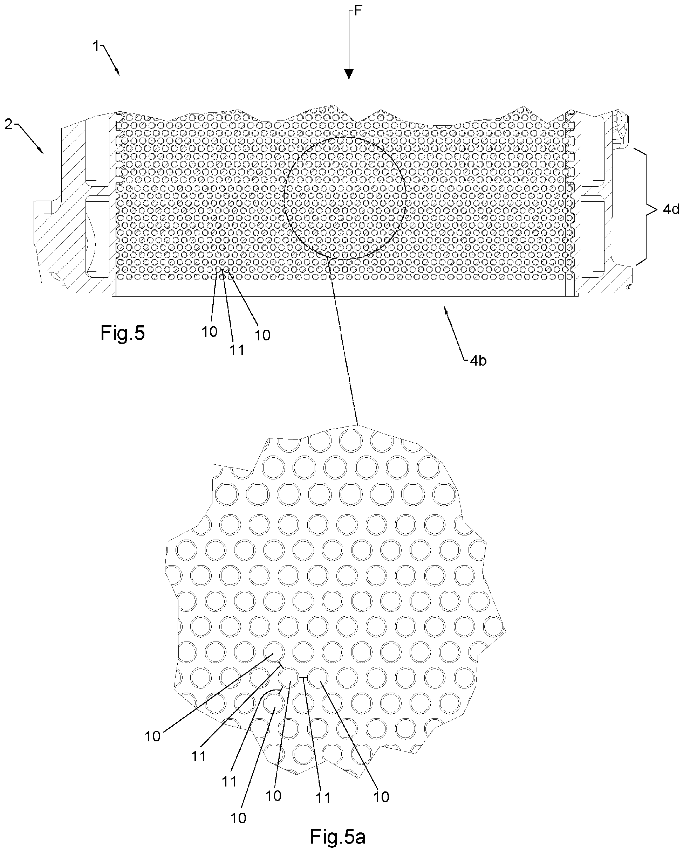

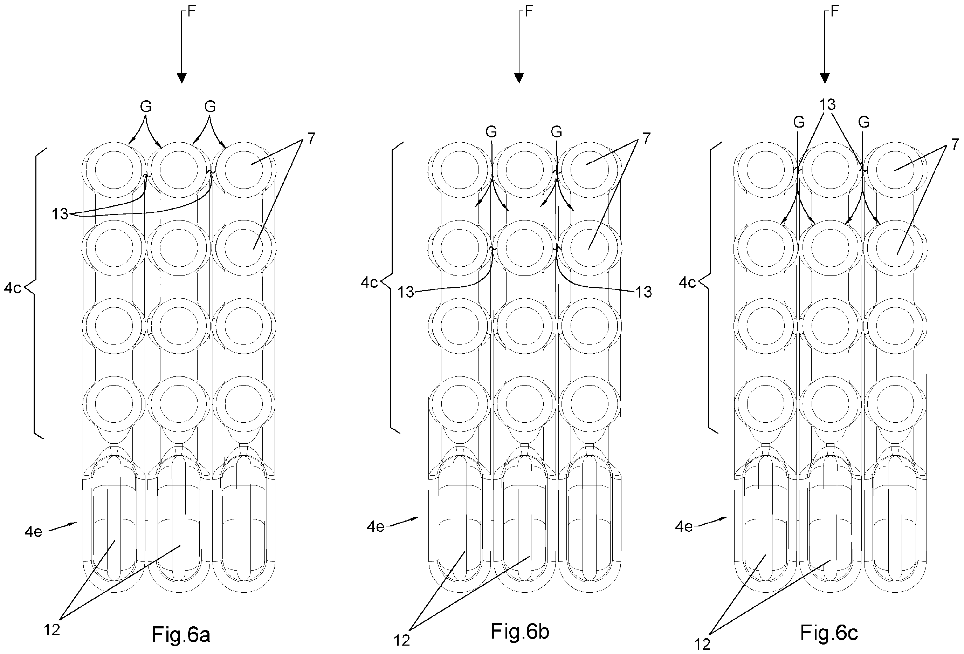

- Figure 5 shows a partial sectional view of the heat exchanger of Figure 1 according to plane IV-IV;
- Figure 5a shows a detail of Figure 5;
- Figures from 6a to 6c show a sequence of the advance of the flame and of the hot gases through the first duct of the heat exchanger;
- Figure 7 shows a partial sectional view of the heat exchanger of Figure 1 according to plane VII-VII;
- Figure 7a shows a detail of Figure 7;
- Figure 8 shows a partial sectional view of the heat exchanger of Figure 1 according to plane VIII-VIII;
- Figure 8a shows a detail of Figure 8;
- Figure 9 shows an axonometric view of the boiler of the invention.

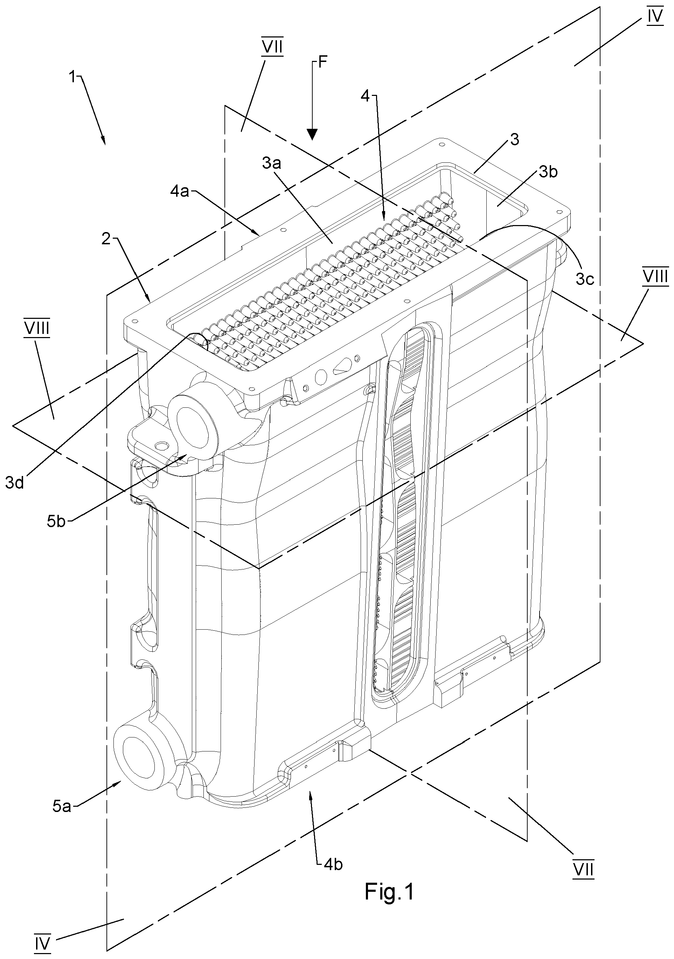

The heat exchanger of the invention is shown in Figure 1, where it is indicated as a whole by the reference number **1**.

The heat exchanger **1** comprises a structure **2** in a single piece, in which it is possible to identify a tubular jacket **3** which internally delimits a first duct **4**, extending between an inlet portion **4a** and an outlet portion **4b** which define a downflow direction **F** for a first heat exchange fluid **G** along the first duct **4**. Preferably but not necessarily, the first fluid **G** is a hot gas produced by a burner arranged at the level of the inlet portion **4a** of the first duct **4**, known per se.

The surface area of the cross section of the first duct **4** preferably decreases from the inlet portion **4a** towards the outlet portion **4b**, so that the gas flows down along the first duct **4** at a speed which is almost constant, notwithstanding the density increase caused by its progressive cooling along its path.

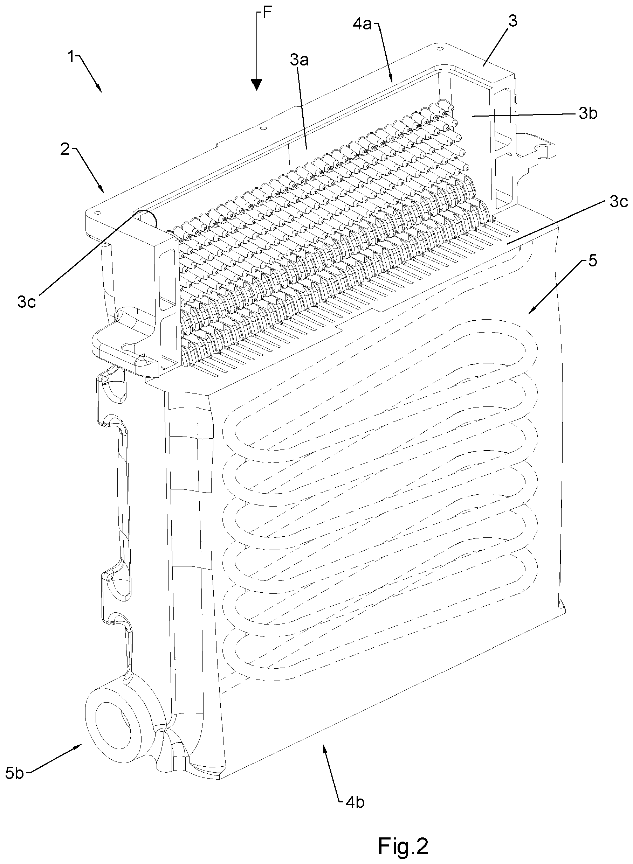

The heat exchanger **1** comprises also a second duct **5**, visible in Figure 2, for the passage of a second heat exchange fluid which is preferably water.

Preferably but not necessarily, the second duct **5** is defined around all the external walls **3a**, **3b**, **3c** and **3d** of said tubular jacket **3**, in thermal contact with them. It cannot be excluded, however, that said second duct **5**, according to different embodiments of the invention, could be defined externally to just one external wall of the tubular jacket **3** or at least externally to a number of external walls of said tubular jacket **3** which is lower than the total number of said external walls, provided that it is always in thermal contact with them.

The second duct **5**, too, extends between an inlet mouth **5a** and an outlet mouth **5b**.

The cross section of the second duct **5** can be constant or variable, in such a way as to obtain a predetermined trend of the speed of the second fluid along the second duct **5** with respect to the heat exchange efficiency to be obtained in each area of the second duct **5**.

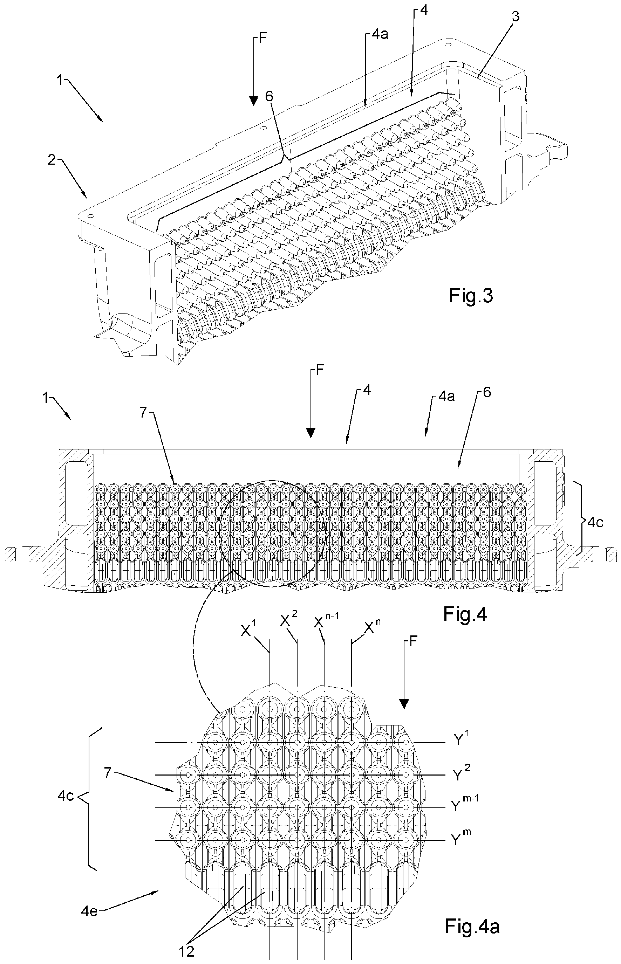

As shown in greater detail in the partial sectional view of Figure 3, the heat exchanger **1** comprises a plurality of heat exchange elements **6** projecting from the tubular jacket **3** towards the inside of the first duct **4**.

According to the invention, at the level of a first portion **4c** of the first duct **4**, which is adjacent to the inlet portion **4a**, the plurality of said heat exchange elements **6** comprises a first plurality of pins **7**, each one of which is defined on the tubular jacket **3** and aligned with the pins **7** adjacent to it according to axes X¹, X²...Xⁿ⁻¹, Xⁿ which are parallel to the downflow direction **F** and according to axes Y¹, Y²...Yⁿ⁻¹, Yⁿ which are orthogonal to the same downflow direction **F,** as can be observed in Figure 4 and in the detail of Figure 4a.

Said configuration of the heat exchanger **1** of the invention substantially makes it possible to create essentially rectilinear paths for the flame and the hot gas between adjacent rows of pins **7** which are parallel to one another and to the downflow direction **F**.

In even greater detail, taking in consideration the sequence of Figures from 6a to 6c, when the flame and the hot gas **G** come in contact with a first pair of pins **7** adjacent to each other, they transfer part of their own heat to the latter and then keep flowing forward through the empty space **13** defined between said pair of pins **7**. Flowing through said empty space **13**, the flame and/or the hot gas are subjected to an acceleration due to the Venturi effect and are thus thrusted towards the successive pair of pins **7**. Once having flown past said empty space **13**, the flame and/or the hot gas **G** slow/s down, widen/s their trajectory until coming in contact with said successive pair of pins **7**, to which they transfer part of their heat. Advantageously, as already mentioned, the acceleration to which the flame and the hot gas are subjected while they flow through the empty space **13** between the pairs of pins **7** allows them to move continuously and constantly forward along the downflow direction **F**. In other words, the flame and the hot gas do not tend to move past the pins **7** at the level of the free ends of the latter, as is disadvantageously the case for the configurations of the heat exchangers of the known art.

The sequence of events just described above is repeated until the end of the above mentioned first portion **4c** of the first duct **4,** after which there is the portion **4e** of the heat exchanger **1** at the highest temperature and wherein, as can be seen in Figure 4a, a plurality of tabs **12** extending longitudinally is defined, said tabs being arranged in such a way that they are parallel to one another and to said downflow direction **F**.

Advantageously, therefore, said configuration of the first portion **4c** guarantees that the hot gas and the flame are conveyed through the pins **7** and that the heat is transmitted in a more uniform and more effective manner compared to the heat exchangers of the known art.

Furthermore, said configuration makes it possible to reduce the production of carbon monoxide, as the hot gas follows a more rectilinear and less tortuous path, thus meeting fewer obstacles to its passage, which favours a higher flow of oxygen and thus a more correct combustion process, thus achieving the objects of the invention.

According to the preferred embodiment of the invention, as shown in Figure 3, the pins **7** of the first portion **4c** are in the shape of a truncated cone.

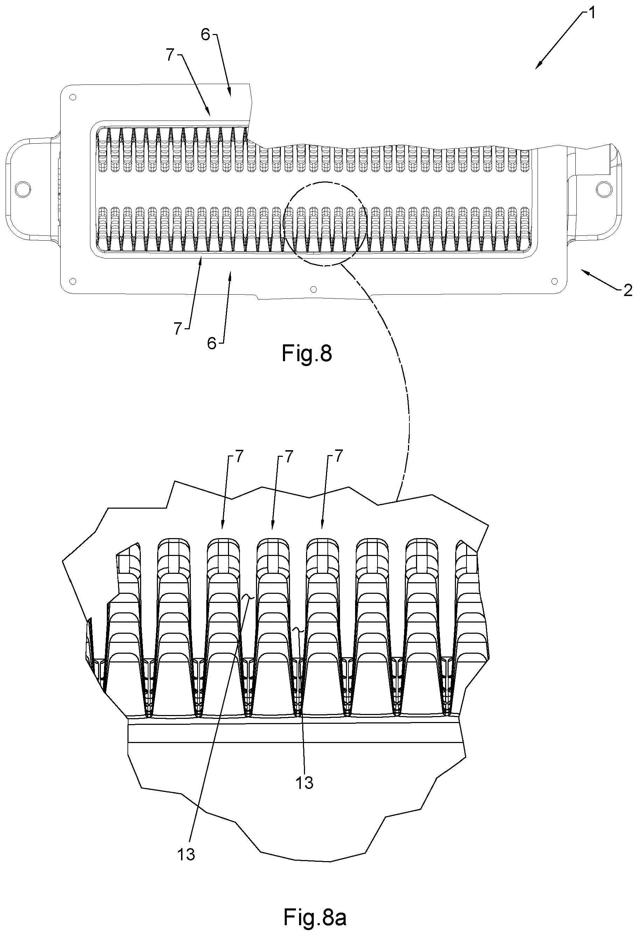

Said last characteristic makes it possible to define said empty space **13** between each pair of adjacent pins **7** in the shape of an upside-down triangle, as can be observed in Figure 8 and in the detail of Figure 8a.

More specifically, each pair of adjacent pins **7** have their bases directly in contact with each other.

Advantageously, said configuration makes it possible to obtain a homogeneous redistribution of heat along the entire length of the pins and at the same time favours said Venturi effect, especially in proximity to the bases of the pins **7**, which in its turn contributes to the advance of the flame and of the hot gas in the downflow direction **F**.

According to the invention, an interconnection rib **8** is defined at the level of said first portion **4c**, between each pair of pins **7** aligned according to an axis X¹, X²...Xⁿ⁻¹, Xⁿ which is parallel to the downflow direction **F**, in such a way as to increase the contact surface between the various pins **7**. Said interconnection rib **8** is defined in such a way that it projects from the tubular jacket **3** towards the inside of the first duct **4** over a height **h1** that is shorter than the heights **h2** of the pins **7** themselves.

Furthermore, said interconnection rib **8** is defined between each last pin **7** of said parallel rows of pins **7** belonging to the first portion **4c** and one of the tabs **12** of the portion **4e** at the highest temperature, also in this case in such a way as to increase the contact surface between said last pin **7** and the tabs **12**.

In particular, since, as explained above, in said portion **4c** the tabs **12** absorb a very high quantity of thermal energy, which usually is not transferred completely to the underlying surface of the tubular jacket **3** for the heat exchange with the water flowing through the second duct **5**, the presence of said interconnection rib **8** makes it possible to redistribute said excess thermal energy in a direction opposite to said downflow direction **F**, that is, in the direction of the pins **7** present in the first portion **4c**.

It is thus possible to avoid the development of a high difference in temperature between the first duct **4,** which contains the hot gas, and the second duct **5**, in which the water flows, at the level of said tabs **12**.

Consequently, at the level of said portion **4e** at a higher temperature it is possible to prevent a sliding movement of the fibres of the material with which the heat exchanger **1** is made on the side of the first duct **4** due to the high temperature, while on the side of the second duct **5** the stability of the material is guaranteed.

In fact, it is known that said high difference in temperature, with the consequent sliding movement of the fibres, would cause structural defects to be produced in the structure of the heat exchanger, which in technical jargon are known as "cracks".

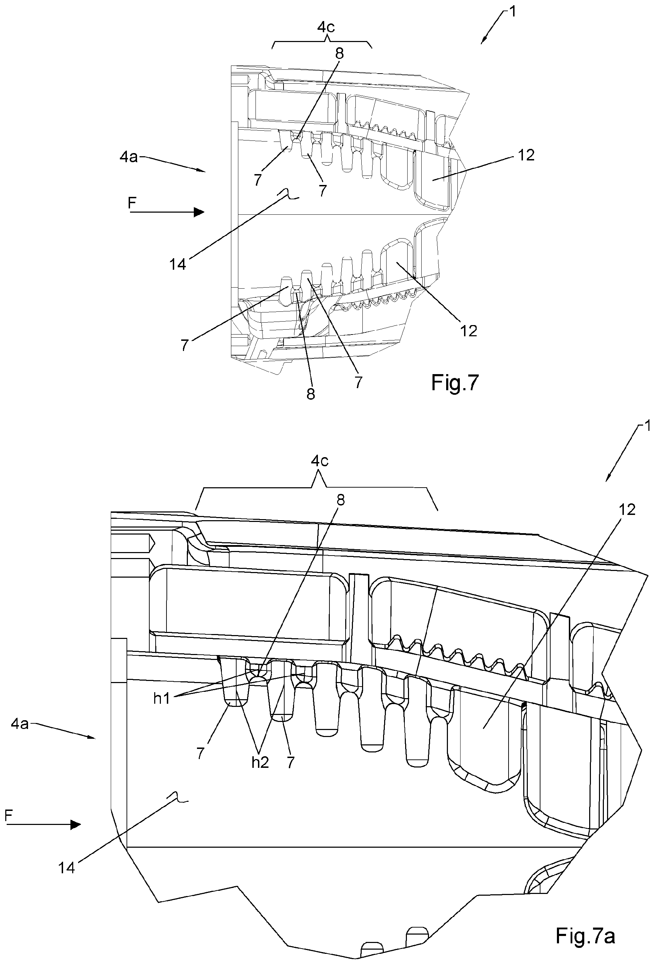

Always according to the preferred embodiment of the invention, at the level of said first portion **4c** the pins **7** have different heights **h2** which increase according to the downflow direction **F**, in such a way as to define an empty cavity **14** in the first portion **4c** itself, said empty cavity being suited to serve the function of a combustion chamber, as clearly shown in Figure 7 and in the detail of Figure 7a.

Preferably, said empty cavity **14** has a triangular outline with maximum cross-sectional area at the inlet portion **4a** of the first duct **4,** said cross-sectional area decreasing progressively until it becomes equal to zero at the end of said first portion **4c** and at the beginning of said tabs **12**.

According to the preferred embodiment of the heat exchanger **1** of the invention, in said first duct **4,** at the level of a second portion **4d** adjacent to the outlet portion **4b**, said plurality of heat exchange elements **6** comprises a second plurality of pins **10**, wherein the dimensional ratio between the empty space **11** between two adjacent pins **10**, with respect to all directions, and the diameter of each one of said pins **10** is included between 0.3 and 0.5, preferably between 0.35 and 0.45, and even more preferably said ratio is in the neighbourhood of 0.38.

Still preferably, said second plurality of pins **10** is distributed in staggered rows, so that at the level of said second portion **4d** the hot gas is forced to flow along a turbulent path and to hit against the surfaces of the various pins **10**, which favours its condensation.

Said ratio, together with the staggered arrangement of the pins **10**, advantageously makes it possible to favour said condensation and at the same time to reduce, if not avoid, the accumulation of fine dust or debris in general over time, which is due to the condensation process itself.

According to the preferred embodiment of the invention, the diameter of each pin **10** of said second plurality of pins **10** is included between 4 and 5 mm, preferably equal to 4.5 mm, and the empty space **11** between each pair of adjacent pins **10** has a width included between 1.5 and 2 mm, preferably a width equal to 1.7 mm.

It cannot be excluded, however, that according to different embodiments of the invention said absolute dimensions are different, provided that the above specified dimensional ratio between the empty spaces **11** and the diameter of the pins **10** is maintained.

Among other things, it is important to highlight that the configuration of said second portion **4d** could be the subject of a claim in itself, with no need for the heat exchanger **1** to present, in its first portion **4c**, the configuration of alignment of the pins **7** described above. In fact, said configuration of the second portion **4d** alone makes it possible to favour the condensation process and at the same time to reduce, if not avoid, the accumulation of fine dust or debris in general over time, which is due to the condensation process itself. As regards the second duct **5**, preferably and as can be observed in Figure 2, it has a helical configuration, so that the second fluid faces the minimum resistance during its downflow and at the same time comes in contact with all the sides of the tubular jacket **3**.

According to a variant embodiment of the heat exchanger **1** that is the subject of the invention, however, said second duct **5** may have the a coil-shaped configuration.

It is evident that in further variant embodiments of the invention, not represented herein, the second duct **5** may have any configuration different from the two configurations described above, provided that it is such as to allow the heat exchange to take place between the second fluid and the tubular jacket **3**.

The tubular jacket **3** and the heat exchange elements **6** are made as a single-piece body **2**, for example through sand casting.

In this way, advantageously, the heat exchanger **1** is obtained through a single casting cycle, thus simplifying the production process and reducing the cost of the heat exchanger **1** compared to the heat exchangers of the known type used for similar purposes.

Preferably, the casting is made with aluminium, even if in variant embodiments of the invention any other heat conductive material can be used, in particular metals having thermal and mechanical characteristics similar to those of aluminium.

From the operational point of view, the heat exchanger **1** described above is associated with a burner **101** arranged at the level of the inlet portion **4a** of the first duct **4**.

The flame produced by the burner develops at the level of the empty cavity **14** defined at the level of the first portion **4c** of the first duct **4**.

The hot gas flows through the first duct **4** towards the outlet portion **4b**, coming in contact with the heat exchange elements **6**, to which it transfers part of its heat.

The heat recovered in this way is transmitted through convection to the tubular jacket **3** and then to the second fluid which flows in the second duct **5** and which, as explained above, is preferably water.

As the hot gas proceeds towards the outlet portion **4b** of the first duct **4,** its temperature decreases until, in proximity to the outlet portion **4b**, it transfers further heat to the second fluid before definitively leaving the first duct **4**.

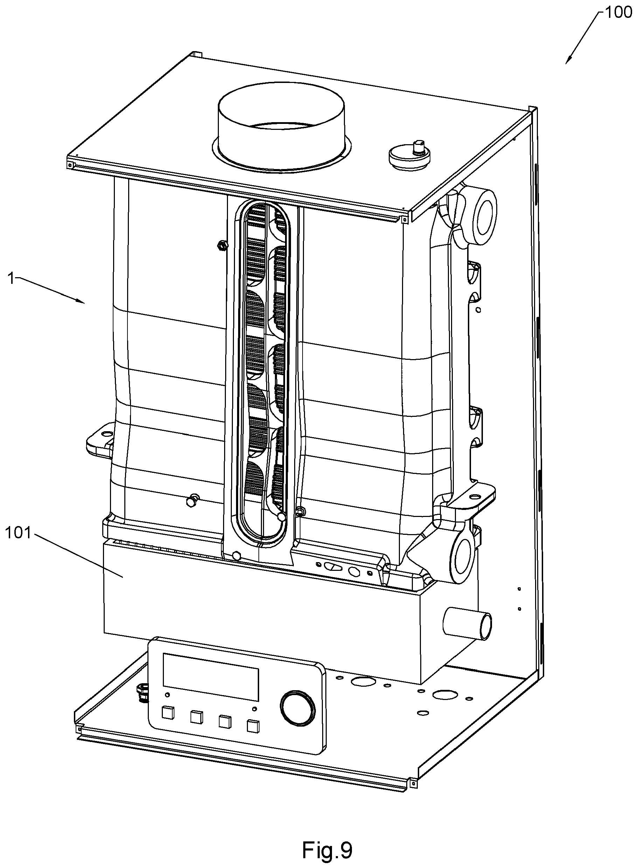

As explained above, the subject of the invention includes also the boiler **100**, preferably of the condensing type, comprising a burner **101** and a heat exchanger **1** according to the invention, as schematically shown in Figure 9. According to the above, therefore, the heat exchanger that is the subject of the invention and the boiler comprising said heat exchanger achieve all the set objects.

More precisely, the invention achieves the object to provide a heat exchanger that is more efficient than the heat exchangers of the known type described above.

In greater detail, the invention achieves the object to provide a heat exchanger that makes it possible to improve the thermal balance in the heat exchange area.

The invention also achieves the object to provide a heat exchanger that makes it possible to reduce the accumulation of carbon monoxide in the area adjacent to the burner.

## Claims

1. Heat exchanger (1) particularly suited to be used in condensing boilers, comprising a single-piece structure (2) which comprises:
- a tubular jacket (3) which internally delimits a first duct (4) extending between an inlet portion (4a) and an outlet portion (4b) which define a downflow direction (F) for a first heat exchange fluid (G);
- a second duct (5) arranged in thermal contact with at least one external wall (3a) of said tubular jacket (3) and extending between an inlet mouth (5a) and an outlet mouth (5b) for the passage of a second heat exchange fluid;
- a plurality of heat exchange elements (6) projecting from said tubular jacket (3) towards the inside of said first duct (4);
wherein, at least in a first portion (4c) of said first duct (4) adjacent to said inlet portion (4a), said plurality of heat exchange elements (6) comprises a first plurality of pins (7), each one of said pins (7) being defined on said tubular jacket (3) so that it is aligned with the pins (7) adjacent to it according to axes (X¹, X²...Xⁿ⁻¹, Xⁿ) which are parallel to said downflow direction (F) and according to axes (Y¹, Y²...Yⁿ⁻¹, Yⁿ) which are orthogonal to said downflow direction (F),
**characterized in that** between each pair of said pins (7) aligned according to an axis (X¹, X²...Xⁿ⁻¹, Xⁿ) parallel to said downflow direction (F) there is an interconnection rib (8) for interconnecting said pair of said pins (7), said interconnection rib (8) projecting from said tubular jacket (3) towards the inside of said first duct (4) over a height (h1) which is shorter than the heights (h2) of said pins (7).

2. Heat exchanger (1) according to claim 1, **characterized in that** said pins (7) of said first portion (4c) are in the shape of a truncated cone.

3. Heat exchanger (1) according to any of the preceding claims, **characterized in that** at the level of said first portion (4c) of said first duct (4), said pins (7) have different heights (h2), so as to define in said inlet portion (4a) an empty cavity (14) suited to serve the function of a combustion chamber.

4. Heat exchanger (1) according to any of the preceding claims, **characterized in that**, at least for a second portion (4d) of said first duct (4) adjacent to said outlet portion (4b), said plurality of heat exchange elements (6) comprises a second plurality of pins (10), wherein the dimensional ratio between the empty space (11) between two adjacent pins (10) and the diameter of each pin (10) is included between 0.3 and 0.5, preferably between 0.35 and 0.45, and even more preferably said ratio is in the neighbourhood of 0.38.

5. Heat exchanger (1) according to claim 4, **characterized in that** said second plurality of pins (10) is distributed in staggered rows.

6. Heat exchanger (1) according to claim 4 or 5, **characterized in that** the diameter of each pin (10) of said second plurality of pins (10) is included between 4 and 5 mm, preferably is equal to 4.5 mm, and the empty space (11) between each pair of adjacent pins (10) has a width included between 1.5 and 2 mm, and preferably said width is equal to 1.7 mm.

7. Heat exchanger (1) according to any of the preceding claims, **characterized in that** said second duct (5) extends according to a coil-shaped configuration.

8. Heat exchanger (1) according to any of the claims from 1 to 6, **characterized in that** said second duct (5) extends according to a helix-shaped configuration.

9. Boiler (100), preferably of the condensing type, comprising:
- a burner (101);
- a heat exchanger (1) according to any of the preceding claims.

## Patentansprüche

1. Wärmetauscher (1), der besonders zur Verwendung in Brennwertkesseln geeignet ist und eine einstückige Struktur (2) umfasst, die Folgendes umfasst:
- einen rohrförmigen Mantel (3), der innen einen ersten Kanal (4) abgrenzt, der sich zwischen einem Einlassabschnitt (4a) und einem Auslassabschnitt (4b) erstreckt, die eine Abwärtsströmungsrichtung (F) für ein erstes Wärmeaustauschfluid (G) definieren;
- einen zweiten Kanal (5), der in thermischem Kontakt mit mindestens einer Außenwand (3a) des rohrförmigen Mantels (3) angeordnet ist und sich zwischen einer Einlassmündung (5a) und einer Auslassmündung (5b) für den Durchtritt eines zweiten Wärmeaustauschfluids erstreckt;
- eine Vielzahl von Wärmeaustauschelementen (6), die von dem rohrförmigen Mantel (3) in Richtung des Inneren des ersten Kanals (4) vorstehen;
wobei zumindest in einem ersten Abschnitt (4c) des ersten Kanals (4), der an dem Einlassabschnitt (4a) benachbart ist, die Vielzahl von Wärmeaustauschelementen (6) eine erste Vielzahl von Stiften (7) umfasst, wobei jeder der Stifte (7) an dem rohrförmigen Mantel (3) so definiert ist, dass er mit den ihm benachbarten Stiften (7) gemäß Achsen (X¹, X²...Xⁿ⁻¹, Xⁿ), die parallel zur Abwärtsströmungsrichtung (F) und gemäß Achsen (Y¹, Y²...Yⁿ⁻¹, Yⁿ), die orthogonal zu der Abwärtsströmungsrichtung (F) sind, ausgerichtet ist,
**dadurch gekennzeichnet, dass** zwischen jedem Paar der Stifte (7), ausgerichtet gemäß einer Achse (X¹, X²...Xⁿ⁻¹, Xⁿ) parallel zur Abwärtsströmungsrichtung (F) es eine Miteinanderverbindungsrippe (8) zum Miteinanderverbinden des Paars der Stifte (7) gibt, wobei die Miteinanderverbindungsrippe (8) von dem rohrförmigen Mantel (3) in Richtung des Inneren des ersten Kanals (4) über eine Höhe (h1) vorsteht, die kürzer ist als die Höhen (h2) der Stifte (7).

2. Wärmetauscher (1) nach Anspruch 1, **dadurch gekennzeichnet, dass** die Stifte (7) des ersten Abschnitts (4c) die Form eines Kegelstumpfes aufweisen.

3. Wärmetauscher (1) nach einem der vorhergehenden Ansprüche, **dadurch gekennzeichnet, dass** auf dem Niveau des ersten Abschnitts (4c) des ersten Kanals (4) die Stifte (7) unterschiedliche Höhen (h2) aufweisen, um in dem Einlassabschnitt (4a) einen leeren Hohlraum (14) zu definieren, der geeignet ist, die Funktion einer Brennkammer zu erfüllen.

4. Wärmetauscher (1) nach einem der vorhergehenden Ansprüche, **dadurch gekennzeichnet, dass** zumindest für einen zweiten Abschnitt (4d) des ersten Kanals (4), der an dem Auslassabschnitt (4b) benachbart ist, die Vielzahl von Wärmeaustauschelementen (6) eine zweite Vielzahl von Stiften (10) umfasst, wobei das Abmessungsverhältnis zwischen dem Leerraum (11) zwischen zwei benachbarten Stiften (10) und dem Durchmesser jedes Stifts (10) zwischen 0,3 und 0,5, vorzugsweise zwischen 0,35 und 0,45, und noch bevorzugter das Verhältnis in der Nähe von 0,38 liegt.

5. Wärmetauscher (1) nach Anspruch 4, **dadurch gekennzeichnet, dass** die zweite Vielzahl von Stiften (10) in versetzten Reihen verteilt ist.

6. Wärmetauscher (1) nach Anspruch 4 oder 5, **dadurch gekennzeichnet, dass** der Durchmesser jedes Stifts (10) der zweiten Vielzahl von Stiften (10) zwischen 4 und 5 mm liegt, vorzugsweise gleich 4,5 mm ist, und der Leerraum (11) zwischen jedem Paar benachbarter Stifte (10) eine Breite zwischen 1,5 und 2 mm aufweist, und vorzugsweise die Breite gleich 1,7 mm ist.

7. Wärmetauscher (1) nach einem der vorhergehenden Ansprüche, **dadurch gekennzeichnet, dass** der zweite Kanal (5) sich gemäß einer spiralförmigen Konfiguration erstreckt.

8. Wärmetauscher (1) nach einem der Ansprüche 1 bis 6, **dadurch gekennzeichnet, dass** sich der zweite Kanal (5) gemäß einer helix-förmigen Konfiguration erstreckt.

9. Kessel (100), vorzugsweise vom Brennwerttyp, umfassend:
- einen Brenner (101);
- einen Wärmetauscher (1),
nach einem der vorhergehenden Ansprüche.

## Revendications

1. Échangeur de chaleur (1) particulièrement adapté pour être utilisé dans les chaudières à condensation, comprenant une structure monobloc (2) qui comprend:
- une enveloppe tubulaire (3) qui délimite intérieurement un premier conduit (4) s'étendant entre une partie d'entrée (4a) et une partie de sortie (4b) qui définissent une direction d'écoulement descendant (F) pour un premier fluide d'échange thermique (G);
- un second conduit (5) disposé en contact thermique avec au moins une paroi externe (3a) de ladite enveloppe tubulaire (3) et s'étendant entre un orifice d'entrée (5a) et un orifice de sortie (5b) pour le passage d'un second fluide d'échange thermique;
- une pluralité d'éléments d'échange thermique (6) faisant saillie de ladite enveloppe tubulaire (3) vers l'intérieur dudit premier conduit (4);
dans lequel, au moins dans une première partie (4c) dudit premier conduit (4) adjacente à ladite partie d'entrée (4a), ladite pluralité d'éléments d'échange thermique (6) comprend une première pluralité de broches (7), chacune desdites broches (7) étant définie sur ladite enveloppe tubulaire (3) de manière à être alignée avec les broches (7) qui lui sont adjacentes selon des axes (X¹, X²...Xⁿ⁻¹, Xⁿ) qui sont parallèles à ladite direction d'écoulement descendant (F) et selon des axes (Y¹, Y²...Yⁿ⁻¹, Yⁿ) qui sont orthogonaux à ladite direction d'écoulement descendant (F),
**caractérisé en ce qu'**entre chaque paire desdites broches (7) alignées selon un axe (X¹, X²...Xⁿ⁻¹, Xⁿ) parallèlement à ladite direction d'écoulement descendant (F), il y a une nervure d'interconnexion (8) pour interconnecter ladite paire desdites broches (7), ladite nervure d'interconnexion (8) faisant saillie de ladite enveloppe tubulaire (3) vers l'intérieur dudit premier conduit (4) sur une hauteur (h1) qui est plus courte que les hauteurs (h2) desdites broches (7).

2. Échangeur de chaleur (1) selon la revendication 1, **caractérisé en ce que** lesdites broches (7) de ladite première partie (4c) ont la forme d'un cône tronqué.

3. Échangeur de chaleur (1) selon l'une quelconque des revendications précédentes, **caractérisé en ce qu'**au niveau de ladite première partie (4c) dudit premier conduit (4), lesdites broches (7) présentent des hauteurs (h2) différentes, de manière à définir dans ladite partie d'entrée (4a) une cavité vide (14) pouvant remplir la fonction d'une chambre de combustion.

4. Échangeur de chaleur (1) selon l'une quelconque des revendications précédentes, **caractérisé en ce que,** au moins pour une seconde partie (4d) dudit premier conduit (4) adjacente à ladite partie de sortie (4b), ladite pluralité d'éléments d'échange thermique (6) comprend une seconde pluralité de broches (10), dans lequel le rapport dimensionnel entre l'espace vide (11) entre deux broches adjacentes (10) et le diamètre de chaque broche (10) est compris entre 0,3 et 0,5, de préférence entre 0,35 et 0,45, et de préférence encore, ledit rapport est de l'ordre de 0,38.

5. Échangeur de chaleur (1) selon la revendication 4, **caractérisé en ce que** ladite seconde pluralité de broches (10) est répartie en rangées décalées.

6. Échangeur de chaleur (1) selon la revendication 4 ou 5, **caractérisé en ce que** le diamètre de chaque broche (10) de ladite seconde pluralité de broches (10) est compris entre 4 et 5 mm, de préférence est égal à 4,5 mm, et l'espace vide (11) entre chaque paire de broches adjacentes (10) a une largeur comprise entre 1,5 et 2 mm, et de préférence ladite largeur est égale à 1,7 mm.

7. Échangeur de chaleur (1) selon l'une quelconque des revendications précédentes, **caractérisé en ce que** ledit second conduit (5) s'étend selon une configuration en forme de bobine.

8. Échangeur de chaleur (1) selon l'une quelconque des revendications de 1 à 6, **caractérisé en ce que** ledit second conduit (5) s'étend selon une configuration en forme d'hélice.

9. Chaudière (100), de préférence du type à condensation, comprenant:
- un brûleur (101);
- un échangeur de chaleur (1),
selon l'une quelconque des revendications précédentes.
